Europäisches Patentamt

European Patent Office

Office européen des brevets

(11) Publication number: **0 218 676**
**B1**

(12) **EUROPEAN PATENT SPECIFICATION**

(45) Date of publication of patent specification: **17.01.90**

(51) Int. Cl.[5]: **C 09 D 175/04, C 08 L 75/04, C 08 L 27/06, B 05 D 5/00**

(21) Application number: **86902600.5**

(22) Date of filing: **24.03.86**

(86) International application number:
**PCT/US86/00592**

(87) International publication number:
**WO 86/06088 23.10.86 Gazette 86/23**

(54) **Polyurethane composition, coating and coating method.**

(30) Priority: **08.04.85 US 720976**

(43) Date of publication of application:
**22.04.87 Bulletin 87/17**

(45) Publication of the grant of the patent:
**17.01.90 Bulletin 90/03**

(84) Designated Contracting States:
**DE FR GB IT SE**

(56) References cited:
**DE-A-2 037 605**
**DE-B-1 282 700**
**GB-A-1 016 786**
**US-A-2 891 876**
**US-A-3 487 126**
**US-A-3 875 090**

(73) Proprietor: **MINNESOTA MINING AND MANUFACTURING COMPANY**
**3M Center, P.O. Box 33427**
**St. Paul, Minnesota 55133 (US)**

(72) Inventor: **OIEN, Hans, T.**
**P.O. Box 33427**
**Saint Paul, MN 55133 (US)**

(74) Representative: **Baillie, Iain Cameron**
**c/o Ladas & Parry Isartorplatz 5**
**D-8000 München 2 (DE)**

Courier Press, Leamington Spa, England.

**Description**

Technical Field

This invention relates to a composition for coating a substrate with a chip- and abrasion-resistant polyurethane coating, a method of coating using the same and to a substrate coated with the coating.

Background

Notwithstanding a considerable portion of roadways being paved, both in the United States and in foreign countries, there exists a serious paint chipping problem which continues to plague motor vehicle owners, caused by gravel and other small particles on the road bed being thrown against the painted surfaces of such vehicles. The same problem plagues the owners of other painted structures such as boats, trailers, airplanes, trains, tanks, towers, and the like, although the impacting particles may be from other sources.

The chipping problem is perhaps most noted by the owners and manufacturers of automobiles, particularly those having areas wherein the body of the automobile tends to curve inwardly immediately behind the front and/or rear wheels. This situation causes particles such as gravel from streets and other roadway surfaces to be carried on the surface of the tires and impacted against the painted surface of the automobile. Since the paved roadways typically have small gravel particles and other hard particles on their surface and unpaved roads usually always contain such material, the propelling of high speed particulate material against the painted surface of the automobile is unavoidable. While means have been suggested for imposing a shield such as a mud flap or mud guard between the automobile wheel and the painted surface, this solution has not been completely satisfactory because it detracts from the vehicle's aesthetic appearance and adds yet another cost to the already high price of the automobile.

Attempts have been made to produce tougher, more chip-resistant paint for automobiles, but these have not been generally completely satisfactory. One recognized solution is to cover all or parts of the finished surface of the automobile with a protective coating.

Automobile surfaces are typically finished or covered with pigmented paints such as acrylic enamel, acrylic lacquer or nitrocellulose lacquer. These materials produce coatings which are difficult to overcoat with protective materials.

A useful protective coating composition will be chip- and abrasion-resistant, have good adhesion to the painted surface, be clear, smooth (i.e., without surface roughness) and indistinguishable when applied to the areas being protected over the painted surface. Prior to the present invention, none of the surface protective coatings has such characteristics.

While polyurethane lacquers containing non-reactive polyurethane in solvent are preferred candidates for use as protective coatings because such polyurethanes are tough and impact resistant, they do not adhere adequately to conventional painted automobile surfaces because they lack free or available reactive groups such as isocyanate groups which would normally provide attachment sites to promote good adhesion. Thus, such coatings are prone to failure as evidenced by peeling, cracking, checkering or the like. Moreover, it is preferred to employ such a protective coating as a transparent, smooth-surface coating as some coatings tend to discolor, or provide a coated surface which is not smooth but instead rough or otherwise unattractive.

Because of its higher cost, polyurethane is typically not employed to cover the entire surface to be painted. The chip-resistant coatings are customarily added to those locations which would be more susceptible to chipping, e.g., on the automobile body immediately behind the wheels, the leading portion of the automobile such as the front of the hood and other front portions of the body. Protective coatings must therefore adhere to conventional automobile painted surfaces such as those based on acrylic resins.

Various attempts have been made to produce chip-resistant polyurethane protective coatings. One example is that disclosed by Monson (U.S. Pat. No. 4,254,168), assigned to the assignee of the present application, which discloses a pigmented polyurethane protective coating but which does not contain fully reacted polyurethane. Other examples include Levy (U.S. Pat. No. 3,875,090) which discloses a high impact and abrasion resistant coating composition comprising a mixture of a partially hydrolyzed vinyl chloride-vinyl acetate copolymer, an alkyd and an isocyanate terminated urethane prepolymer. This composition depends upon curing of the prepolymer instead of solvent evaporation.

While so-called "solution vinyls" (vinyl chloride-vinyl ester copolymers) have been reactively combined with precursor materials for producing polyurethane, the resultant polymerized material is typically not clear and is difficult to apply because of the required reaction. Such a polyblend is disclosed by Kazama et al (U.S. Pat. No. 4,081,493), teaching a resin composition having resistance to hydrolysis which comprises a polyblend of a polyvinyl chloride resin, a polyester-urethane, a lead stabilizer, and one or more polyhydric alcohols.

DE—A—1,282,700 discloses a binder system for magnetic recording media which comprises vinyl chloride-vinyl acetate copolymer with a substantially entirely non-reactive completely polymerised polyurethane. However the composition does not form a clear coating, owing to the presence of finely divided magnetic particles.

GB 1,016,786 discloses a polymer mixture from which abrasion-resistant films can be deposited. The polymer mixture comprises polyester urethane and polymerised vinyl chloride. However it is specified that the polyurethane is derived from an *aromatic* isocyanate.

## Summary of the Invention

The present invention provides a composition capable upon drying of providing a clear chip- and abrasion-resistant coating having improved adhesion to acrylic surfaces, said composition comprising:

(a) fully reacted solvent-soluble polyurethane derived from aliphatic diisocyanate
(b) an adhesion-promoting amount of vinyl chloride-vinyl ester copolymer, and
(c) solvent for said polyurethane and said copolymer to make said composition coatable.

Such a composition has the impact resistance and chip- and abrasion-resistance of polyurethane yet has excellent adhesion to automobile finishes such as those based upon acrylic materials.

In another aspect the invention provides a method of coating the surface of a substrate comprising:

(a) applying to said surface a clear coating composition comprising:

(i) fully reacted solvent-soluble polyurethane derived from aliphatic diisocyanate;
(ii) an adhesion-promoting amount of vinyl chloride-vinyl ester copolymer; and
(iii) solvent for said polyurethane and said copolymer to make said composition coatable; and

(b) drying said coating composition to provide a chip- and abrasion-resistant coating.

The coating is typically applied over the acrylic finish of e.g. an automobile but, since such acrylic materials also have excellent adhesion to the coating compositions, it may be employed as an undercoating beneath the acrylic coating. The composition is preferably free of materials which require chemical reaction for use. The coating produced with the composition is impact, chip, and abrasion resistant, and clear so that it is preferably indistinguishable on the automobile surface in the areas where it is used as a top coating yet it resists delamination from such a surface.

The coating composition comprises fully reacted, solvent-soluble polyurethane derived from aliphatic diisocyanate, an adhesion-promoting amount of vinyl chloride-vinyl ester copolymer, and solvent for the polyurethane and the copolymer to make the composition coatable. The preferred adhesion-promoting amount of the vinylchloride-vinyl ester copolymer comprises from about 5 to about 60 parts (most preferably 5 to 30 parts) by weight based on 100 parts of the composition on a dry, solvent-free basis. The preferred vinylchloride vinyl ester copolymer is a carboxyl-modified vinylchloride-vinyl ester. The preferred vinylchloride-vinyl ester copolymer is vinylchloride-vinyl acetate copolymer.

The invention further provides a coated surface with a coating comprising fully reacted, solvent-soluble polyurethane and an adhesion promoting amount of vinylchloride-vinyl ester copolymer.

## Detailed Description

Examples of useful vinyl chloride-vinyl ester copolymers for the practice of the present invention include:

A vinyl chloride/vinyl acetate/maleic acid copolymer (86/13/1 weight percent) having a glass transition temperature of 74°C, a number average molecular weight of 21,000, and inherent viscosity of 0.50, and a specific gravity of 1.35 (available under the registered trademark "UCAR" solution vinyl VMCH from the Union Carbide Corporation) hereinafter referred to as "VMCH".

A vinyl chloride/vinyl acetate copolymer (90/4 weight percent) which also contains a hydroxyl-containing comonomer (2.3 weight percent OH) having glass transition temperature of 79°C and a number average molecular weight of 23,000, an inherent viscosity of 0.53, and a specific gravity of 1.39 (available under the registered trademark "UCAR" solution vinyl VAGH from the Union Carbide Corporation) hereinafter referred to as "VAGH".

The vinyl chloride/vinyl acetate copolymer (86/14 weight percent) having an inherent viscosity of 0.50, a specific gravity of 1.35, a glass transition temperature of 72°C and a number average molecular weight of 20,000 (available from the Union Carbide Corporation under the registered trademark "UCAR" solution vinyl VYHH) hereinafter referred to as "VYHH".

Useful fully reacted polyurethane/solvent combinations for the practice of the present invention include the following lacquers, in which the polyurethane is derived from aliphatic diisocyanate.

Polyurethane lacquer (hereinafter referred to as "Polyurethane Lacquer AV1122EA" manufactured by Chemische Werke Huls AG of West Germany. This lacquer consists of 30 parts fully reacted polyester-based polyurethane having a weight average molecular weight of 42,000 dissolved in 70 parts of a solvent consisting of equal parts by weight of ethanol and ethyl acetate. The lacquer has a Brookfield viscosity of 500 cps employing a No. 2 spindle at 20 rpm and 25°C. The polyurethane consists of, on a mole basis, 21% isophorone diisocyanate, 30% neopentyl glycol, 18% hexane diol, and 31% adipic acid.

Polyurethane lacquer (hereinafter referred to as "Polyurethane Lacquer 24—117") available under the trade designation "24—117" from Chemical Components, Inc., New Jersey. This lacquer consists of 30 parts fully reacted polyester-based polyurethane dissolved in 70 parts of a solvent consisting of equal parts by weight of ethanol and ethyl acetate. This lacquer has a Brookfield viscosity of 500 cps employing a No. 2 spindle at 20 rpm and 25°C. The polyurethane has a weight average molecular weight of about 29,000 and consists of, on a mole basis, 19% isophorone diisocyanate, 37% adipic acid and 44% 1,4-butane diol.

Polyester-based polyurethane lacquer (hereinafter referred to as "Polyurethane Lacquer Q13710") available under the trade designation "Q13710" from K. J. Quinn Company, Massachusetts consisting of 25 parts by weight polyurethane in 75 parts by weight of a solvent mixture of isopropyl alcohol, toluene, and xylene. The lacquer has a Brookfield viscosity of 500 cps employing a No. 2 spindle at 20 rpm and 25°C.

A useful fully reacted polyurethane is available under the registered trademark "Estane" 5714FL from B. F. Goodrich Company having a 100% solids high molecular weight polyether-based polyurethane resin (solvent-solutions of the same being hereinafter referred to as " 'Estane' Polyurethane Lacquer").

The solvents which may be added to the liquid composition defined in the present invention are those hydrocarbons and oxygenated hydrocarbon solvents customarily added to acrylic lacquers or enamels or nitrocellulose lacquers. Such solvents should be selected to be compatible with the resin and lacquer compositions defined herein. Examples of such useful solvents are ethyl acetate, butyl acetate, "Cellosolve" acetate and methyl ethyl ketone.

Flow control agents may also be added to level the coated film. An example of such an agent is available under the tradename "Dow Corning" 56 from the Dow Corning Corporation. Other conventional additives may also be employed. When the composition is used as an undercoating beneath the acrylic coating, pigments, fillers and the like may also be included.

The coating composition of the invention may be applied by any known compatible technique such as spraying, brush or roller application, dipping, etc. The preferred method of application is by spraying, most preferably by using a container which includes the coating composition and a suitable aerosol propellant and which is fitted with a spray nozzle.

TESTING

Crosshatch Adhesion Test

The coating compositions of the present invention were tested for adhesion to various painted substrates. The test is that described in ASTM D 3359—78—B entitled Standard Methods for Measuring Adhesion by Tape Test. The test method assesses the adhesion of coating films to metallic substrates by applying and removing pressure sensitive adhesive tape over cuts made in a film of the coating composition. The test panel is first finished with a conventional lacquer such as white refinishing lacquer and then abraded with fine grit abrasive paper such as that available under the trade designation "Tri-M-ite Fre-Cut" No. 320 from the Minnesota Mining and Manufacturing Company. The abraded metal panel is then air dried for at least 24 hours at room temperature. A crosshatch pattern with 6 cuts in each direction is then made in the coating to the substrate, pressure-sensitive adhesive tape is applied over the crosshatch and removed, and adhesion is evaluated by comparison with descriptions and illustrations. The cutting tool is a sharp razor blade, scalpel, knife or other cutting device which has a cutting edge in good condition. A cutting guide is used to ensure straight cuts. The tape is 1 inch (25 mm) wide semi-transparent pressure-sensitive tape with an adhesion strength of 36 plus or minus 2.5 oz/in. (40 plus or minus 2.8 g/mm) with when tested in accordance with ASTM Test Method B 1000.

In the test, an area free of blemishes and minor surface imperfections on the paint coating is selected. Care should be taken to ensure that the surface is clean and dry. Extremes in temperature or relative humidity which may affect the adhesion of the tape or the coating should be avoided. Two sets of six parallel cuts each, with cuts one set being at 90° to cuts in the other set, are made in the coating, each about 20 mm long so as to intersect near the middle of the test panel. The cut should penetrate through the coating to the substrate in one steady motion. The metal should be visible through the coating. After cutting, the film is lightly brushed to remove detached flakes or ribbons of coatings. A piece of tape 75 mm long is removed from the roll and placed with the center of tape at the intersection of the cuts with the tape running in the same direction as one set of the cuts. The tape is smoothed in place by finger in the area of the cuts and then rubbed firmly with an eraser on the end of a pencil. Within ninety plus or minus 30 seconds of application, the tape is removed by creasing a free end and pulling it off rapidly without jerking back upon itself at as close an angle of 180° as possible. The cut area is then inspected for removal of coating from the substrate and rated for adhesion according to the following scale:

5B    The edges of the cuts are completely smooth; none of the squares of the lattice is detached.

4B    Small flakes of the coating are detached at intersections; less than 5% of the area is affected.

3B    Small flakes of the coating are detached along edges and at intersections of cuts. The area affected is 5 to 15% of the lattice.

2B    The Coating has flaked along the edges and on parts of the squares. The area affected is 15 to 35% of the lattice.

1B    The coating has flaked along the edges of cuts in large ribbons and whole squares have detached. The area affected is 35 to 65% of the lattice.

0B    Flaking and detachment worse than Grade 1.

An excellent coating will have a Crosshatch Adhesion value of 5B. A commercially acceptable coating will have a Crosshatch Adhesion value of 3B—5B.

Chipping Test

Certain coatings were also tested for chip resistance using the chip resistance test described in the Society of Automotive Engineer's Technical Report J400. The test consists of projecting a standardized road gravel by means of a control air blast onto a suitable test panel. The testing apparatus is contained in a box on wheels, called a gravelometer, designed to contain road gravel, a test holder, and a gravel projecting mechanism. The gravel was water-worn gravel rather than crushed limestone or rock, which will pass through ⅜ inch (9.5 mm) screen when graded, but be retained on ⅜ inch (9.5 mm) screen. The projecting mechanism, located in the front of the test panel, consists of an air nozzle in the base of a pipe T. The stem of the pipe T points upward and is connected to a funnel into which the gravel is poured. The gravel, falling into the air blast, is projected toward and impacts upon the test panel, which is usually held perpendicular to the impinging gravel. All testing is conducted at room temperature. After gravel impact, masking tape is applied to remove any loose chips remaining on the panel, and the degree of chipping is determined by counting the number and size of all chips.

The test panel is the same as that described hereinbefore in the description of the Crosshatch Adhesion Test which has been coated with the test coating and permitted to dry and age for a minimum of 24 hours at room temperature before testing. The test panels are conditioned for a minimum of one hour at the specified test temperature prior to testing. In the test five pints of gravel is applied over a 25 to 50 second period of time employing an air pressure of about 25 psi (1.75 kg/cm²) as the propelling means.

The number of chips is a numerical rating selected from the range of 0 to 10 as described in Table I to indicate the number of chips in a 4 inch (10 cm) square area.

TABLE I

| Rating Number | Number of Chips |
| --- | --- |
| 10 | 0 |
| 9 | 1 |
| 8 | 2—4 |
| 7 | 5—9 |
| 6 | 10—24 |
| 5 | 25—49 |
| 4 | 50—74 |
| 3 | 75—99 |
| 2 | 100—149 |
| 1 | 150—250 |
| 0 | 250 |

The size of the chips are rated A through D, according to the table set out below:

TABLE II

| Rating Letter | |
| --- | --- |
| A | <1 mm (< approximately 0.03 in.) |
| B | 1.3 mm (approximately 0.03. 0.12 in.) |
| C | 3.6 mm (approximately 0.12. 0.25 in.) |
| D | >6 mm (> approximately 0.25 in.) |

Thus the most desirable chipping test rating is 10—A and the least desirable is 0—D. It should be noted that more than one result in each category is possible.

EXAMPLES

The invention is illustrated by the following examples, wherein all parts are by weight unless otherwise stated.

Example 1

| Weight (g) | Ingredients |
|---|---|
| 4 | VMCH |
| 43.8 | Ethylacetate |
| 16.9 | Butylacetate |
| 31.8 | Polyurethane lacquer 24—117* |
| 21.1 | Ethanol |

* Derived from the aliphatic diisocyanate:isophorone diisocyanate.

A coating composition was prepared directly in a 16 oz. (473 ml) aerosol can of the above ingredients. The ethylacetate, butylacetate and vinyl chloride-vinyl acetate copolymer were placed into the aerosol can. The can was agitated on a paint shaker for 30 minutes until a clear solution resulted. The polyurethane lacquer and ethanol were then added followed by aerosol propellant consisting of 14 ml isobutane and 14 ml N-propane. The aerosol can was then sealed and a dispenser applied and the can was agitated on the paint shaker for an additional 30 minutes.

Examples 2—3

Examples 2—3 were prepared in the same manner as Example 1 (using the same aliphatic polyurethane) except the vinyl chloride-vinyl ester copolymer was substituted as indicated in Table 1.

To show the uniqueness of the invention in that other elastomeric type additives will not provide improved adhesion in the polyurethane coating composition, Control Examples A—K were prepared in the same manner as Example 1. No additive was used in Control A and other elastomeric-type additives were used in Control Examples B—K. Most of the additives of the Control Examples were incompatible with the polyurethane lacquer, resulting in phase separation when the two were mixed. Of the control additives which were compatible, no improved Crosshatch Adhesion was noted as indicated in Table III below.

EP 0 218 676 B1

## TABLE III

| Ex. No. | Additive | | Compatible | Crosshatch Adhesion |
|---|---|---|---|---|
| | Generic Name | Trademark | | |
| 1 | Solution vinyl | VMCH | Yes | 5B |
| 2 | " | VAGH | " | 3B |
| 3 | " | VYHH | " | 5B |
| A | None | None | — | 0B |
| B | Polyester resin | "Polylite"[1] 31—006 | Yes | 0B |
| C | " | "Polylite"[1] 31—039 | " | 0B |
| D | " | "Vitel"[2] 222 | No | 0B |
| E | polystyrene | None | No | 0B |
| F | acrylic resin | "Acryloyd"[3] A—21—LV | No | 0B |
| G | Cellulose acetate butyrate | CAB ½ sec. | No | — |
| H | Polyester Resin | "Vitel"[2] VPE83 | No | — |
| I | Saturated alicyclic hydrocarbon | "Arkon" M90 | No | — |
| J | Hydrogenated hydrocarbon | "Super Nirez" 5100 | No | 0B |
| K | Ethyl Cellulose | N-Type | No | 0B |

1. Trademark of Reichhold Chemical Co.
2. Trademark of the Goodyear Company.
3. Trademark of the Rohm and Haas Co.

### Example 4

| Weight (g) | Ingredients |
|---|---|
| 3.8 | Ethyl acetate |
| 1.7 | "Cellosolve" acetate |
| 0.4 | VMCH |
| 3.8 | Polyurethane lacquer Q13710 |
| 2.7 | "Cellosolve" acetate |
| 2.6 | Ethanol |

7

The first three ingredients, ethyl acetate, "Cellosolve" acetate and VMCH, were mixed in a small vial on a paint shaker for fifteen minutes until a clear solution was obtained. The remaining ingredients were then added to the vial, and the contents were mixed well and bar coated on a white refinishing acrylic lacquer panel that had been abraded with 320 grit abrasive paper (available from the Minnesota Mining and Manufacturing Company under the registered trademark "Tri-M-ite Fre-Cut" No. 320). The coating was permitted to air dry for 24 hours at room temperature and then the Crosshatch Adhesion was determined and found to be 5B. A control, employing the same formulation except omitting the VMCH, showed 0B Crosshatch Adhesion under the same evaluation conditions.

Example 5

| Weight (g) | Ingredients |
|---|---|
| 10.0 | "Estane" polyurethane lacquer consisting of 10 parts "Estane" 5714 F1 polyurethane* and 90 parts tetrahydrofuran |
| 4.0 | Solution of 10 parts VMCH in 90 parts tetrahydrofuran |

* Derived from an aliphatic diisocyanate.

The ingredients were mixed in a small vial and bar coated on a white refinishing acrylic lacquer panel treated in the same manner as described in Example 4, air dried for 24 hours at room temperature and evaluated for Crosshatch Adhesion. Crosshatch Adhesion was 5B. A control of the same composition without VMCH had a Crosshatch Adhesion of 0B.

Table IV reveals the Chip Rating and Crosshatch Adhesion values as a function of "VMCH" modifier content in the amount by weight shown with the balance of 100 being polyurethane "24—117". The measured surface area in mm² of paint removed as a result of chipping, reported as "Chip Area" is also shown in Table IV. The higher the Chip Area the more severe the chipping problem.

TABLE IV

| VMCH Modifier (%) | Chip Rating | Crosshatch Adhesion | Chip Area (mm) |
|---|---|---|---|
| 4.8 | 2—A | 0B | 2 |
| 9.1 | 1—A | 3B | 2 |
| 16.7 | 2—A; 9—C | 3B | 3 |
| 23.2 | 2—A | 5B | 3 |
| 28.7 | 5—A; 8—B; 9—C | 5B | 3 |
| 49 | 5—A; 8—B; 6—C; 9—D | 5B | 61 |
| 58.9 | 6—A; 8—B; 9—C; 8—D | 5B | 78 |
| 74 | 5—A; 6—B; 8—C; 7—D | 5B | 96 |

As shown in Table IV, the Crosshatch Adhesion values improve significantly as the amount of "VMCH" modifier is increased.

Table V shows the Chip Area of certain commercially available clear protective coatings.

8

TABLE V

| Commercial Coating | Chip Area (mm) |
| --- | --- |
| "Chip Shield"[1] | 533 |
| "Chip Guard"[2] | 276 |
| "Dietzler Delclear" DAU 75[3] | 226 |

1. The tradename of an acrylic coating composition available from Taylor Made Products, Inc., Akron, Ohio.
2. The tradename of an acrylic coating composition available from SEM Products, Inc., Belmont, California.
3. The tradename for an acrylic polyurethane coating composition available from PPG Industries, Dietzler Automotive Finishes, Troy, Michigan.

A commercially acceptable coating composition for aesthetic reasons will have a very low Chip Area value with a Crosshatch Adhesion value of 3B—5B. It should be noted that all of the commercial coating compositions have a Chip Area value far in excess of the Chip Area value of coatings according to the present invention.

Various modifications may be made in the disclosed compositions, coatings and method without departing from the scope of the claims.

**Claims**

1. A composition capable upon drying of providing a clear chip- and abrasion-resistant coating having improved adhesion to acrylic surfaces, said composition comprising:
   (a) fully reacted solvent-soluble polyurethane derived from aliphatic diisocyanate
   (b) an adhesion-promoting amount of vinyl chloride-vinyl ester copolymer; and
   (c) solvent for said polyurethane and said copolymer to make said composition coatable.

2. A composition according to claim 1 wherein said adhesion-promoting amount of said vinyl chloride-vinyl ester copolymer comprises from about 5 to about 60 parts by weight based on 100 parts of the composition on a dry solvent-free basis.

3. A composition according to claim 1 or claim 2 wherein said vinyl chloride-vinyl ester copolymer is carboxyl-modified vinyl chloride-vinyl ester.

4. A composition according to any of claims 1 to 3 wherein said vinyl chloride-vinyl ester copolymer is vinyl chloride-vinyl acetate copolymer.

5. A composition according to any preceding claim having a viscosity of about 50—500 mPas.

6. A composition according to any preceding claim wherein said fully reacted solvent-soluble polyurethane has a weight average molecular weight of about 18,000—50,000.

7. A composition according to any preceding claim wherein said solvent is a blend of an alcohol having from 1—6 carbon atoms and an ester having from 1—6 carbon atoms.

8. A composition according to any preceding claim wherein said vinyl chloride-vinyl acetate copolymer comprises 60—90 mole% vinyl chloride and 10—40 mole% vinyl ester.

9. A method of coating the surface of a substrate comprising:
   (a) applying to said surface a clear coating composition comprising:
   (i) fully reacted solvent-soluble polyurethane derived from aliphatic diisocyanate
   (ii) an adhesion-promoting amount of vinyl chloride-vinyl ester copolymer; and
   (iii) solvent for said polyurethane and said copolymer to make said composition coatable; and
   (b) drying said coating composition to provide a chip- and abrasion-resistant coating.

10. A method according to claim 9 wherein said vinyl chloride-vinyl ester copolymer is carboxyl-modified vinyl chloride-vinyl acetate copolymer.

11. A method according to claim 9 or claim 10 wherein said surface is an acrylic surface.

12. A method according to claim 11 wherein said surface is a motor vehicle surface which has been painted with acrylic paint.

13. A surface coated with a clear coating comprising fully reacted, solvent-soluble polyurethane derived from an aliphatic diisocyanate and an adhesion-promoting amount of vinyl chloride-vinyl ester copolymer.

14. A surface according to claim 13 wherein said adhesion-promoting amount of said vinyl chloride-vinyl ester copolymer comprises from about 5 to about 60 parts by weight based on 100 parts of the coating.

15. A surface according to claim 13 or claim 14 wherein said vinyl chloride-vinyl ester copolymer is carboxyl-modified vinyl chloride-vinyl acetate copolymer.

**Patentansprüche**

1. Zusammensetzung, die geeignet ist, beim Trocknen einen durchsichtigen, abspan- und abriebfesten Überzug zu bilden, der eine erhöhte Haftfestigkeit auf Acryloberflächen besitzt, wobei die Zusammensetzung

(a) ein von aliphatischem Diisocyanat abgeleitetes, ausreagiertes, lösungsmittellösliches Polyurethan,

(b) eine die Haftung fördernde Menge eines Vinylchlorid-Vinylester-Copolymers und

(c) ein die Zusammensetzung in einen ihr Auftragen ermöglichenden Zustand bringendes Lösungsmittel für das Polyurethan und das Copolymer enthält.

2. Zusammensetzung nach Anspruch 1, dadurch gekennzeichnet, daß die die Haftung fördernde Menge des Vinylchlorid-Vinylester-Copolymers etwa 5 bis etwa 60 Gewichtsteile pro 100 Trockengewichtsteile der lösungsmittelfreien Zusammensetzung beträgt.

3. Zusammensetzung nach Anspruch 1 oder 2, dadurch gekennzeichnet, daß das Vinylchlorid-Vinylester-Copolymer ein carboxylmodifiziertes Vinylchlorid-Vinylester-Copolymer ist.

4. Zusammensetzung nach einem der Ansprüche 1 bis 3, dadurch gekennzeichnet, daß das Vinylchlorid-Vinylester-Copolymer ein Vinylchlorid-Vinylacetat-Copolymer ist.

5. Zusammensetzung nach einem der vorhergehenden Ansprüche mit einer Viskosität von etwa 50 bis 500 mPa.

6. Zusammensetzung nach einem der vorhergehenden Ansprüche, dadurch gekennzeichnet, daß das ausreagierte, lösungsmittellösliche Polyurethan ein gewichtsdurchschnittliches Molekulargewicht von etwa 18 000 bis 50 000 hat.

7. Zusammensetzung nach einem der vorhergehenden Ansprüche, dadurch gekennzeichnet, daß das Lösungsmittel ein Gemisch aus einem Alkohol mit 1 bis 6 Kohlenstoffatomen und einem Ester mit 1 bis 6 Kohlenstoffatomen ist.

8. Zusammensetzung nach einem der vorhergehenden Ansprüche, dadurch gekennzeichnet, daß das Vinylchlorid-Vinylacetat-Copolymer 60 bis 90 Mol-% Vinylchlorid und 10 bis 40 Mol-% Vinylester enthält.

9. Verfahren zum Beschichten der Oberfläche eines Substrats, in dem

(a) auf das Substrat eine durchsichtige Überzugszusammensetzung aufgetragen wird, die

(i) ein von aliphatischem Diisocyanat abgeleitetes, ausreagiertes, lösungsmittellösliches Polyurethan,

(ii) eine die Haftung fördernde Menge eines Vinylchlorid-Vinylester-Copolymers und

(iii) ein die Zusammensetzung in einen ihr Auftragen ermöglichenden Zustand bringendes Lösungsmittel für das Polyurethan und das Copolymer enthält, und

(b) durch Trocknen der Überzugszusammensetzung ein abspan- und abriebfester Überzug gebildet wird.

10. Verfahren nach Anspruch 9, dadurch gekennzeichnet, daß das Vinylchlorid-Vinylester-Copolymer ein carboxylmodifiziertes Vinylchlorid-Vinylacetat-Copolymer ist.

11. Verfahren nach Anspruch 9 oder 10, dadurch gekennzeichnet, daß die genannte Oberfläche eine Acryloberfläche ist.

12. Verfahren nach Anspruch 11, dadurch gekennzeichnet, daß die genannte Oberfläche eine mit einem Acryllack bestrichene Oberfläche eines Kraftfahrzeuges ist.

13. Oberfläche, die mit einem durchsichtigen Überzug beschichtet ist, der ein von einem aliphatischen Diisocyanat abgeleitetes, ausreagiertes, lösungsmittellösliches Polyurethan und eine die Haftung fördernde Menge eines Vinylchlorid-Vinylester-Copolymers enthält.

14. Oberfläche nach Anspruch 13, dadurch gekennzeichnet, daß die die Haftung fördernde Menge des Vinylchlorid-Vinylester-Copolymers etwa 5 bis etwa 60 Gewichtsteile pro 100 Teile des Überzuges beträgt.

15. Oberfläche nach Anspruch 13 oder 14, dadurch gekennzeichnet, daß das Vinylchlorid-Vinylester-Copolymer ein carboxylmodifiziertes Vinylchlorid-Vinylacetat-Copolymer ist.

**Revendications**

1. Composition capable de former par séchage un revêtement clair résistant à l'écaillage et à l'abrasion, ayant une adhésion améliorée aux surfaces acryliques, ladite composition comprenant:

(a) un polyuréthanne soluble dans les solvants après réaction complète et dérivant d'un diisocyanate aliphatique;

(b) une quantité favorisant l'adhésion d'un copolymère de chlorure de vinyle-ester vinylique, et

(c) un solvant dudit polyuréthanne et dudit copolymère pour que ladite composition puisse être appliquée sous la forme d'un revêtement.

2. Composition selon la revendication 1, dans laquelle ladite quantité favorisant l'adhésion dudit copolymère de chlorure de vinyle-ester vinylique constitue d'environ 5 à environ 60 parties en poids relativement à 100 parties de la composition en matières sèches sans solvant.

3. Composition selon la revendication 1 ou 2, dans laquelle ledit copolymère de chlorure de vinyle-ester vinylique est un chlorure de vinyle-ester vinylique à modification carboxylique.

4. Composition selon l'une quelconque des revendications 1 à 3, dans laquelle ledit copolymère de chlorure de vinyle-ester vinylique est un copolymère de chlorure de vinyle-acétate de vinyle.

5. Composition selon l'une quelconque des revendications précédentes ayant une viscosité d'environ 50 à 500 mPa.s.

6. Composition selon l'une quelconque des revendications précédentes, dans laquelle ledit polyuréthanne soluble dans les solvants après réaction complète a un poids moléculaire moyen d'environ 18 000 à 50 000.

7. Composition selon l'une quelconque des revendications précédentes, dans laquelle ledit solvant est un mélange d'alcool ayant de 1 à 6 atomes de carbone et d'ester ayant de 1 à 6 atomes de carbone.

8. Composition selon l'une quelconque des revendications précédentes, dans laquelle ledit copolymère de chlorure de vinyle-acétate de vinyle comprend 60 à 90% molaires de chlorure de vinyle et 10 à 40% molaires d'ester vinylique.

9. Procédé pour revêtir la surface d'un substrat comprenant:

(a) l'application à ladite surface d'une composition de revêtement claire comprenant:

(i) un polyuréthanne soluble dans les solvants après réaction complète dérivant d'un diisocyanate aliphatique;

(ii) une quantité favorisant l'adhésion d'un copolymère de chlorure de vinyle-ester vinylique, et

(iii) un solvant dudit polyuréthanne et dudit copolymère pour que ladite composition puisse être appliquée sous la forme d'un revêtement; et

(b) le séchage de ladite composition de revêtement pour former un revêtement résistant à l'écaillage et à l'abrasion.

10. Procédé selon la revendication 9, dans lequel ledit copolymère de chlorure de vinyle-ester vinylique est un chlorure de vinyle-acétate de vinyle à modification carboxylique.

11. Procédé selon la revendication 9 ou la revendication 10, dans lequel ladite surface est une surface acrylique.

12. Procédé selon la revendication 11, dans lequel ladite surface est une surface d'un véhicule à moteur qui a été peinte avec une peinture acrylique.

13. Surface revêtue d'un revêtement clair comprenant un polyuréthanne soluble dans les solvants après réaction complète dérivant d'un diisocyanate aliphatique et une quantité favorisant l'adhésion d'un copolymère de chlorure de vinyle-acétate de vinyle.

14. Surface selon la revendication 13, dans laquelle ladite quantité favorisant l'adhésion dudit copolymère de chlorure de vinyle-ester vinylique constitue d'environ 5 à environ 60 parties en poids pour 100 parties en poids du revêtement.

15. Surface selon la revendication 13 ou la revendication 14, dans laquelle ledit copolymère de chlorure de vinyle-ester vinylique est un copolymère de chlorure de vinyle-acétate de vinyle à modification carboxylique.